# EUROPÄISCHE PATENTANMELDUNG

(11) **EP 0 599 130 A2**
(43) Veröffentlichungstag der Anmeldung: **01.06.1994**
(21) Anmeldenummer: 93118182.0
(22) Anmeldetag: 10.11.1993
(51) Int. Cl.: H04M 1/02

(54) **Alphanumerische Sichtanzeige für einen Telefonapparat**

(30) Priorität: 20.11.1992 CH 3565/92
(71) Anmelder: ASCOM BUSINESS SYSTEMS AG, CH-4503 Solothurn (CH)
(72) Erfinder: Iseli, Martin, CH-3012 Bern (CH)
(74) Vertreter: Keller, René, Dr.

(57) **Zusammenfassung**

Im Basisgerät (11) eines Telefonapparates ist unmittelbar auf einer Leiterplatte (15) ein Anzeigeelement (18) angebracht. Diese Platte (15) dient allgemein als Träger elektronischer Bauelemente (16). Ein optisches Umlenkelement, z.B. ein Prisma (22) lenkt das von der Sichtanzeige (18) ausgehende Licht in Richtung der Augen des Telefonbenützers. Das Prisma (22) ist dreiflächig, wobei eine Fläche (23) etwa parallel zum Anzeigeelement (18) liegt, eine Fläche (24) in Richtung der Augen des Benützers ausgerichtet ist und die dritte Fläche (25) als Totalreflexionsfläche dient.

Das optische Umlenkelement kann auch ein Spiegel sein.

## Beschreibung

Die Erfindung betrifft eine alphanumerische Sichtanzeige für das Basisgerät eines Telefonapparates entsprechend dem Oberbegriff von Anspruch 1.

Telefonapparate mit alphanumerischer Sichtanzeige sind bekannt. Insbesondere gibt es Tischtelefone in gestufter Ausführung, bei denen die Sichtanzeige in der Stufenkante als eine einzige Anzeigezeile angeordnet ist. Hierbei ist die Abstrahlfläche im wesentlichen in Richtung auf die Augen des sitzenden Telefonbenützers ausgerichtet.

Aus der Schrift EP-A-0 258 717 ist weiter ein Tischtelefon bekannt, bei dem das "Display" auf einem schwenkbaren Träger montiert ist, der vom Telefonbenützer in mehrere unterschiedliche Gebrauchslagen bringbar ist. Die jeweils gewählte Gebrauchslage wird dabei einem Schwenkwinkel entsprechen, bei dem der Benützer die jeweilige Anzeige am besten erkennen kann.

Aus der Schrift US 4 839 921 ist eine weitere Anzeigeeinheit für eine Telefonstation bekannt, die mittels eines Schnappverschlusses an dieser Station gehalten ist.

Alle diese Anzeigeeinheiten sind in ihrem Aufbau und/oder in der Montage relativ aufwendig, was negative Konsequenzen für den Herstellungspreis hat. Da Telefonapparate heute unter erheblichem Kostendruck stehen, ist es die Aufgabe der Erfindung, eine Anzeigeeinheit für Telefonapparate, insbesondere Tischtelefone anzugeben, die wesentlich kostengünstiger als die bisher bekannten Anzeigen herstellbar ist.

Die Lösung dieser Aufgabe wird durch den kennzeichnenden Teil des Anspruchs 1 angegeben. Die abhängigen Ansprüche geben Ausgestaltungen der Erfindung an.

Im folgenden wird die Erfindung anhand von zwei Figuren beispielsweise näher beschrieben.

Es zeigen:
Fig. 1 - Basisgerät eines flachen Tischtelefons mit integrierter Sichtanzeige im Querschnitt
Fig. 2 - Zweites Basisgerät eines Tischtelefons im Querschnitt.

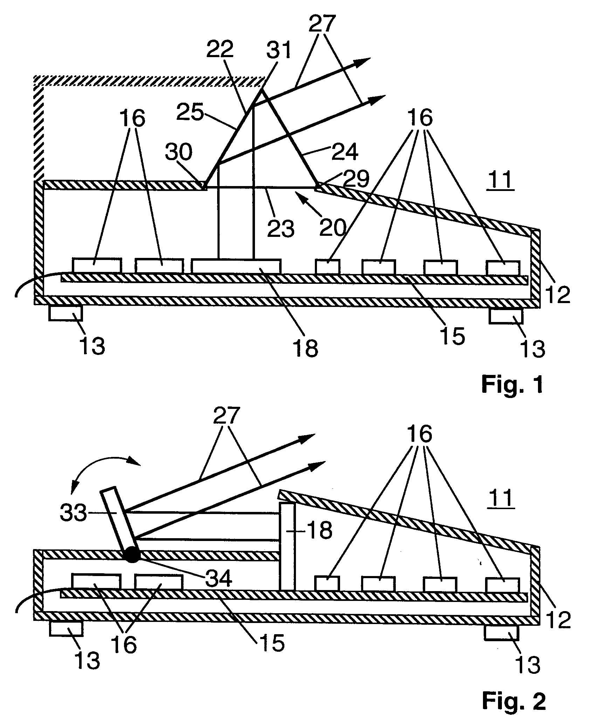

Fig. 1 zeigt das Basisgerät 11 eines Tischtelefons im Querschnitt. Das Gehäuse 12 ist flach gehalten und steht auf vier dämpfenden Beinen 13, z.B. Gummipuffern. Im Inneren des Gehäuses 12 ist eine einzige Leiterplatte 15 als Träger aller der elektronischen Bauelemente 16 angeordnet, die zusammen die notwendigen Schaltungen zum Betrieb des Telefons aufbauen. Auf der Leiterplatte 15 ist weiter flach liegend eine Flüssigkristall-Anzeigeelement 18 aufgelötet. Hierbei ist die Sichtfläche des Elements 18 im wesentlichen parallel zur Leiterplatte 15 und nach oben ausgerichtet. Diesem Anzeigeelement 18 bzw. seiner Sichtfläche zugeordnet ist ein Fenster 20 im Gehäuse 12 und ein in dieses (20) eingesetztes Optik-Prisma 22. Dieses bevorzugt dreiflächige Prisma 22 ist mit seiner ersten Fläche 23 parallel zum Anzeigeelement 18 und mit seiner zweiten Fläche 24 in Richtung auf die Augen des Telefonbenützers ausgerichtet. Die dritte Fläche 25 dient als Totalreflexionsfläche, welche die vom Anzeigeelement 18 im wesentlichen orthogonal nach oben ausgehenden Lichtstrahlen 27 in Richtung des Telefonbenützers umlenkt. Der Telefonbenützer kann hierdurch die jeweilige Anzeige des Anzeigeelementes 18 unmittelbar und bequem erkennen und lesen.

Das Optik-Prisma 22 kann gleichschenklig oder ungleichschenklig sein und ist bevorzugt aus Acrylglas gefertigt. Seine Flächen 23, 24, 25 müssen alle frei von mechanischen Kontakten und möglichst eben sein, um optische Verzerrungen zu vermeiden. Das Prisma 22 ist dem entsprechend z.B. an den zwei Längskanten 29, 30 mit dem Gehäuse 12 verbunden, z.B. verklebt, die die genannte erste Fläche 23 begrenzen. Das Prisma 22 verschliesst hierdurch das Fenster 20 mechanisch und ragt als sichtbares Gebilde über die Oberseite des Telefongehäuses 12 hinaus.

Gestrichelt ist eine alternative Form des Gehäuses 12 gezeigt. Bei dieser Alternative ist der hintere Teil des Gehäuses 12 hochgezogen. Hierdurch lässt sich das Prisma 22 mit seinen Längskanten 29 und 31 am Gehäuse 12 befestigen, die die genannte zweite Fläche 24 begrenzen. Hierbei kommt die genannte dritte Prisma-Fläche 25 ins Innere des Gehäuses 12 zu liegen. Der Vorteil dieser Alternative besteht darin, dass die Möglichkeit zur Verschmutzung dieser optischen, totalreflektierenden Fläche 25 wesentlich vermindert ist.

Fig. 2 zeigt als zweites Ausführungsbeispiel der Erfindung wiederum ein Basisgerät 11 eines Tischtelefons im Querschnitt. Hierbei ist jedoch das Flüssigkristall-Anzeigeelement 18 hochkantig stehend auf der Leiterplatte 15 angeordnet, wobei das Licht 27 im wesentlichen parallel zur Leiterplatte 15 und in Richtung der Geräterückseite abgestrahlt wird. Im hinteren Teil des Basisgerätes 11 ist ein um eine Schwenkachse 34 schwenkbarer, der Sichtfläche des Anzeigeelements 18 zugeordneter Planspiegel 33 angeordnet, der die Lichtstrahlen 27 in Richtung der Augen des Telefonbenützers umlenkt bzw. reflektiert, so dass dieser die jeweilige Anzeige bequem lesen kann.

In beiden Ausführungsbeispielen ist das Flüssigkristall-Anzeigeelement 18 direkt auf der einzigen Leiterplatte 15 elektrisch und mechanisch z.B. durch Löten befestigt. Dies erübrigt jegliche sonstigen Halterungen und/oder Verbindungsleitungen. Hierzu kommt jeweils ein preiswertes optisches Umlenkelement in Form des Prismas 22 bzw. des Spiegels 33, welches Element die abgehenden Lichtstrahlen 27 in Richtung der Augen des Telefonbenützers lenkt. Hierbei ist zu beachten, dass wegen der jeweiligen Umlenkung bzw. Spiegelung die alphanumerischen Zeichen der Anzeige durch das Anzeigeelement 18 auf dem Kopf stehend dargestellt werden müssen. Es gibt Segment-Anzeigen, bei denen dies problemlos und kostenfrei möglich ist.

Die Anordnung nach Fig. 2 erlaubt durch den schwenkbaren Spiegel eine manuelle Anpassung an dem optimalen Blickwinkel des jeweiligen Benützers in einem sehr grossen Bereich. Hierdurch ist es möglich, den Tischapparat baugleich auch als Wandapparat zu verwenden, ohne dass hierbei irgendwelche sonstigen Massnahmen notwendig wären..

Durch beide geschilderte Ausführungsbeispiele ergibt sich ein der Aufgabenstellung entsprechendes preiswertes Telefon mit alphanumerischer Anzeige.

Die Erfindung erlaubt nun eine ganze Reihe von weiteren Varianten, von denen nachfolgend einige im einzelnen aufgeführt sind:
- Das Optik-Prisma 22 wird nicht an seinen Längskanten 29, 30 oder 29, 31 mechanisch gehalten, sondern an seinen Stirnflächen oder Stirnkanten.
- Das Optik-Prisma besteht aus einem anderen Material als Acrylglas, z.B. aus anorganischem, optischem Glas.
- Die Leiterplatte 15 ist im Gehäuse 12 nicht wie in Fig. 1 und Fig. 2 gezeigt parallel zur Standfläche, also im wesentlichen horizontal angeordnet, sondern schräg zur Standfläche bzw. im Schnitt gesehen diagonal. Hierdurch wird der jeweils notwendige optische Umlenkwinkel verändert, der notwendig ist, um das Licht von der Sichtfläche des Anzeigeelementes 18 in die Augen des Telefonbenützers zu lenken. Um bei der Schrägstellung Platz zu sparen, können die elektronischen Bauelemente 16 hierbei in geeigneter Weise auf beiden Seiten der Platte 15 angeordnet sein. Als weiterer Vorteil ergib sich bei der Schrägmontage der Leiterplatte 15 die Möglichkeit, die Telefontastatur in einem ergonomisch günstigen Winkel anzubringen bzw. ebenfalls direkt auf der einzigen Leiterplatte 15 anzuordnen.
- Es werden andere elektronisch ansteuerbare Anzeigeelemente 18 als auf der Basis von Flüssigkristallen verwendet, z.B. auf der Basis von lichtemittierenden Dioden LED.
- Die Anzeigeelemente 18 können statt direkt auf der Leiterplatte 15 verlötet zu sein auch in einem Stecksockel oder durch Steck/Schneid-Verbindungsstifte in Kontaktlöchern auf der Platte 15 starr gehalten sein.
- Die Schwenkachse 34 des Spiegels 33 kann statt unten am Spiegel 33 - wie in Fig. 2 dargestellt - auch in der Mitte oder oben am Spiegel angeordnet sein. Weiter können statt einer Achse 34 oder Achsstummeln auch andere Halterungselemente für die freie Einstellung des Spiegels 33 verwendet werden. Gedacht ist hierbei z.B. an ein Biegeelement in Form eines weichen Bleches, das sich oftmals unterschiedlich verbiegen lässt, ohne zu brechen.
- Der Spiegel 33 kann statt plan auch leicht zylindrisch konvex ausgebildet sein mit dem Zweck einer optischen Vergrösserung der Anzeigeelemente.
- Das Anzeigeelement 18 kann ausgebildet sein als ein einziges Stück, dessen Länge der vollen Anzeigebreite entspricht. Es kann sich jedoch auch aus zwei oder mehr kürzeren Teilelementen zusammensetzen, die in einer Reihe angeordnet sind und gemeinsam die gewünschte Anzeigebreite bewirken.
- Die Anzeige kann statt einzeilig auch zwei- oder mehrzeilig sein.

## Patentansprüche

1. Alphanumerische Sichtanzeige für das Basisgerät (11) eines Telefonapparates,
wobei das Basisgerät (11) in seinem Inneren eine Leiterplatte (15) als Träger elektronischer Bauelemente (16) aufweist, und wobei ein elektronisch ansteuerbares Anzeigeelement (18) vorgesehen ist, das mit der Leiterplatte (15) elektrisch verbunden ist,
dadurch gekennzeichnet,
- dass das Anzeigeelement (18) über seine elektrischen Anschlüsse unmittelbar mit der einen, einzigen Leiterplatte (15) mechanisch starr verbunden ist, und
- dass wenigstens ein dem Anzeigeelement (18) zugeordnetes, optisches Umlenkelement (22, 33) vorgesehen ist, welches die vom Anzeigeelement (18) ausgehenden Lichtstrahlen (27) so nach aussen lenkt, dass die jeweilige Anzeige vom Telefonbenützer unmittelbar und bequem lesbar ist.

2. Sichtanzeige nach Anspruch 1,
dadurch gekennzeichnet,
- dass das Anzeigeelement (18) mit seiner Sichtfläche im wesentlichen parallel zur Leiterplatte (15) auf dieser angeordnet ist, und
- dass das Umlenkelement ein dreiflächiges Prisma (22) ist, welches mit seiner ersten Fläche (23) etwa parallel zur Sichtfläche des Anzeigeelements (18) und mit seiner zweiten Fläche (24) in Richtung auf die Augen des Telefonbenutzers ausgerichtet ist, und dass seine dritte Fläche (25) als Totalreflektionsfläche dient.

3. Sichtanzeige nach Anspruch 2,
dadurch gekennzeichnet,
dass das Prisma (22) in einem Fenster (20) des Gehäuses (12) so gehalten ist, dass es dieses Fenster (20) mechanisch verschliesst und die dritte Prismafläche (25) ausserhalb des Gehäuses (12) liegt.

4. Sichtanzeige nach Anspruch 2,
dadurch gekennzeichnet,
dass das Prisma (22) in einem Fenster (20) des Gehäuses (12) so gehalten ist, dass es dieses Fenster (20) mechanisch verschliesst und die dritte Prismafläche (25) innerhalb des Gehäuses (12) liegt.

5. Sichtanzeige nach Anspruch 2,
dadurch gekennzeichnet
dass das Prisma (22) gleichschenklig ist.

6. Sichtanzeige nach Anspruch 1,
dadurch gekennzeichnet,
- dass das Anzeigeelement (18) mit seiner Sichtfläche im wesentlichen orthogonal zur Leiterplatte (15) auf dieser angeordnet ist, und
- dass das Umlenkelement ein Spiegel (33) ist, dessen Längskanten parallel und dessen Fläche schräg zur Sichtfläche des Anzeigeelements (18) ausgerichtet sind.

7. Sichtanzeige nach Anspruch 6,
dadurch gekennzeichnet,
dass der Spiegel (33) parallel zu seinen Längskanten schwenkbar gelagert ist.

8. Sichtanzeige nach Anspruch 6,
dadurch gekennzeichnet,
dass der Spiegel (33) ein Planspiegel ist.

9. Sichtanzeige nach Anspruch 6,
dadurch gekennzeichnet,
dass der Spiegel (33) ein zylindrisch konvexer Spiegel ist.

10. Sichtanzeige nach Anspruch 1,
dadurch gekennzeichnet,
dass sich das Anzeigeelement (18) aus zwei oder mehr in Reihe angeordneten Teilelementen zusammensetzt.
